(19) Europäisches Patentamt
European Patent Office
Office européen des brevets

(11) Veröffentlichungsnummer: **0 375 989 A2**

(12) **EUROPÄISCHE PATENTANMELDUNG**

(21) Anmeldenummer: **89122156.6**

(51) Int. Cl.⁵: **C09B 11/18**

(22) Anmeldetag: **01.12.89**

(30) Priorität: **14.12.88 DE 3842014**

(43) Veröffentlichungstag der Anmeldung:
**04.07.90 Patentblatt 90/27**

(84) Benannte Vertragsstaaten:
**DE FR GB**

(71) Anmelder: **BAYER AG**
**D-5090 Leverkusen 1 Bayerwerk(DE)**

(72) Erfinder: **Berneth, Horst, Dr.**
**Erfurter Strasse 1**
**D-5090 Leverkusen 1(DE)**
Erfinder: **Raue, Roderich, Dr.**
**Berta-von-Suttner-Strasse 48**
**D-5090 Leverkusen 1(DE)**

(54) **Verfahren zur Herstellung von sulfogruppenfreien Triphenylmethanfarbstoffen.**

(57) Verfahren zur Herstellung von sulfogruppenfreien Triphenylmethanfarbstoffen der Formel

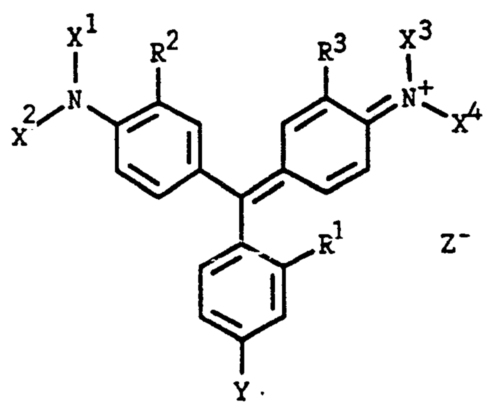

worin
$R^1$ - $R^3$ Wasserstoff, $C_1$-$C_6$-Alkyl, vorzugsweise Methyl, oder Halogen, vorzugsweise Chlor,
Y Wasserstoff oder $NX^5X^6$,
$X^1$ - $X^6$ Wasserstoff, $C_1$-$C_6$-Alkyl, vorzugsweise Methyl, Ethyl, Benzyl oder Phenyl und
$Z^-$ ein Anion bedeuten,
durch Oxidation ihrer Leukoprodukte mit Braunstein, dadurch gekennzeichnet, daß man nach erfolgter Oxidation durch Zusatz von Hydroxid oder Carbonat, Manganhydroxid oder -carbonat und die Carbinolbase des Farbstoffes bildet, dabei oder anschließend die Carbinolbase in einem mit Wasser nicht mischbaren Lösungsmittel aufnimmt, vom Manganhydroxid oder -carbonat und von der Wasserphase abtrennt, die Lösung mit der ggf. mit Wasser gemischten Säure HZ vermischt, das Lösungsmittel entweder schon vor dem Vermischen abdestilliert oder nach dem Vermischen abtrennt oder abdestilliert und den Farbstoff als Lösung oder nach Eindampfen oder Auskristallisieren in fester Form isoliert.

EP 0 375 989 A2

## Verfahren zur Herstellung von sulfogruppenfreien Triphenylmethanfarbstoffen

Zur Herstellung von sulfogruppenfreien Triphenylmethanfarbstoffen durch Oxidation ihrer Leukoprodukte sind mehrere Verfahrensweisen bekannt. Technisch genutzt oder technisch nutzbar sind die Oxidation mit Bleidioxid in salzsaurer Lösung (O. Fischer, Ber. Dtsch. Chem. Ges. 10, 1 624 (1877), 11, 950 (1878), 14, 2 520 (1881)) und die Luftoxidation mit Hilfe von Katalysatoren in Lösungsmitteln wie Eisessig (DE-OS 2 736 679, 2 853 822).

Auch Braunstein ist als Oxidationsmittel eingesetzt worden (O. Fischer, Ann. d. Chem. 206, 129 (1881)).

Im Gegensatz zu sauren Triphenylmethanfarbstoffen, wo das Mangan im alkalischen pH-Bereich ausgefällt werden kann (z.B. als Ammoniummanganphosphat, EP 0 120 399) und der Farbstoff in Lösung bleibt, ist die Abtrennung des Mangans bei sulfogruppenfreien Triphenylmethanfarbstoffen problematisch. Einerseits lassen sich die Farbstoffe häufig im sauren Medium unvollständig oder garnicht ausfällen, andererseits gibt es kaum im sauren Medium schwerlösliche Salze des Mangans, außer z.B. Oxalat und Pyrophosphat, die jedoch auch keine quantitative Abtrennung des Mangans erlauben.

Es bestand demnach ein Bedarf nach einem Verfahren, das die ökologisch unbedenkliche Oxidation mit Braunstein, die komplette Abtrennung des Mangans und die Isolierung von sulfogruppenfreien Triphenylmethanfarbstoffen als technisch interessante Salze oder konzentrierte Lösungen miteinander verknüpft.

Gegenstand der Erfindung ist ein Verfahren zur Herstellung von sulfogruppenfreien Triphenylmethanfarbstoffen der Formel

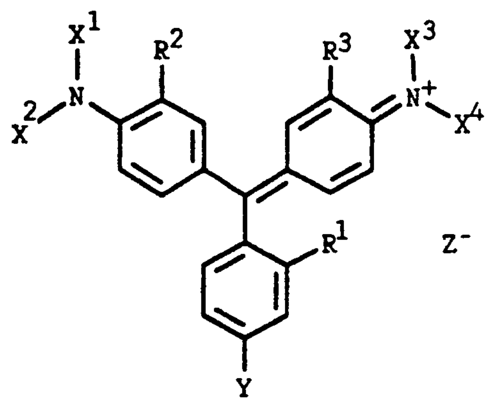

(I),

worin

$R^1$ - $R^3$ Wasserstoff, $C_1$-$C_6$-Alkyl, vorzugsweise Methyl, oder Halogen, vorzugsweise Chlor,

Y Wasserstoff oder $NX^5X^6$,

$X^1$ - $X^6$ Wasserstoff, $C_1$-$C_6$-Alkyl, vorzugsweise Methyl, Ethyl, Benzyl oder Phenyl und

$Z^-$ ein Anion bedeuten,

durch Oxidation ihrer Leukoprodukte mit Braunstein, dadurch gekennzeichnet, daß man nach erfolgter Oxidation durch Zusatz von Hydroxid oder Carbonat, Manganhydroxid oder -carbonat und die Carbinolbase des Farbstoffes bildet, dabei oder anschließend die Carbinolbase in einem mit Wasser nicht mischbaren Lösungsmittel aufnimmt, vom Manganhydroxid oder -carbonat und von der Wasserphase abtrennt, die Lösung mit der ggf. mit Wasser gemischten Säure HZ (II) vermischt, das Lösungsmittel entweder schon vor dem Vermischen abdestilliert oder nach dem Vermischen abtrennt oder abdestilliert und den Farbstoff als Lösung oder nach Eindampfen oder Auskristallisieren in fester Form isoliert.

Geeignete Säuren HZ (II) sind alle anorganischen und organischen Säuren oder Gemische davon, die entweder ein gut kristallines Farbstoffsalz oder eine stabile konzentrierte Farbstofflösung ermöglichen.

Geeignete Lösungsmittel sind gesättigte, ggf. verzweigte und/oder durch Halogen substituierte Alkane, Cycloalkane, Dialkylether, ggf. durch Alkyl, Alkoxy oder Halogen substituiertes Benzol, Naphthalin oder Biphenyl, die auch teilhydriert sein können, oder Ester.

Die Leukoprodukte sind bekannt oder lassen sich nach bekannten Verfahren herstellen.

Die Oxidation mit Braunstein erfolgt im sauren Medium, vorzugsweise in Salzsäure, wobei Carbonsäuren, wie z.B. Essigsäure, zugesetzt sein können. Die Oxidationstemperaturen liegen vorzugsweise im Bereich 0-50 °C, besonders bevorzugt 0-30 °C.

Durch Zugabe von Hydroxiden oder Carbonaten, vorzugsweise der Alkali- oder Erdalkalimetalle, wird alkalisch ge stellt. Dabei können auch Filtrierhilfsmittel zugesetzt werden. Es fallen Manganhydroxid oder

-carbonat und die Carbinolbase des Farbstoffes aus. Die Carbinolbase wird in dem mit Wasser nicht mischbaren Lösungsmittel gelöst, wobei das Lösungsmittel vor oder nach Hydroxid-oder Carbonatzusatz zugefügt werden kann. Diese Prozedur erfolgt bei 10-100° C, wobei es zur kompletten Umwandlung in die Carbinolbase vorteilhaft sein kann, einige Zeit z.B. bei 40-70° C zu verrühren. Zur Abtrennung des Manganhydroxids oder -carbonats und der Wasserphase kann man die Mischung filtrieren und anschließend die Wasserphase von der Lösungsmittelphase abtrennen oder aber bei spezifisch leichterer organischer Phase nach Absitzenlassen die Suspension von Manganhydroxid oder -carbonat in der Wasserphase abtrennen oder aber beide Verfahren kombinieren. Diese Trennungen können bei 10-100° C, vorzugsweise 20-70° C, durchgeführt werden.

Die carbinolbasenhaltige Lösungsmittelphase kann nun mit der Säure HZ (II) oder einer wäßrigen Lösung davon vermischt werden. Dabei bildet sich der Farbstoff der Formel (I) aus. Zur Gewinnung von konzentrierten Lösungen wird nun die Farbstoffphase von der Lösungsmittel phase abgetrennt und zur Entfernung von Resten des organischen Lösungsmittels vorzugsweise im Vakuum andestilliert. Die Phasentrennung erfolgt bei 10-100° C, vorzugsweise bei 20-60° C. Zur Gewinnung von festem Farbstoff kann ebenfalls die Lösungsmittelphase abgetrennt werden und die Farbstoffphase zur Trockene eingedampft werden oder aber die Mischung von Lösungsmittel- und Farbstoffphase gemeinsam zur Trockene eingedampft werden. Dabei wird zweckmäßigerweise im Vakuum gearbeitet.

Die carbinolbasenhaltige Lösungsmittelphase kann aber auch, vorzugsweise im Vakuum, eingedampft werden. Die als Rückstand erhaltene Carbinolbase kann nun mit Säure HZ (II) und Wasser zu einer konzentrierten Farbstofflösung umgesetzt werden, sie kann aber auch durch Zusatz von Säure HZ (II) und evtl. Wasser und Eindampfen zur Trockene, vorzugsweise im Vakuum, in festen Farbstoff überführt werden.

Weiterhin kann man mit geeigneten Säuren HZ (II) eine wäßrige, heiß gesättigte Lösung des Farbstoffes der Formel (I) herstellen, die beim Abkühlen kristallinen Farbstoff der Formel (I) ausscheidet. Dabei ist es in der Regel belanglos, ob man von durch Eindampfen gewonnener Carbinolbase oder von der carbinolbasenhaltigen Lösungsmittelphase ausgeht und im letzteren Fall vor dem Abkühlen die Lösungsmittelphase abtrennt.

Bevorzugt ist das erfindungsgemäße Verfahren zur Herstellung von sulfogruppenfreien Triphenylmethanfarbstoffen der Formel

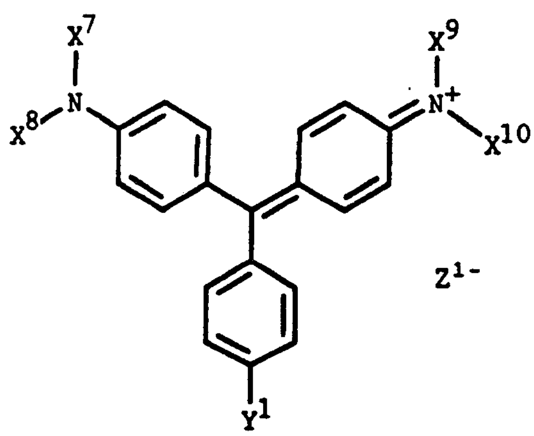

(III),

worin

$Y_1$ Wasserstoff oder $NX^{11}X^{12}$,

$X^7$ - $X^{12}$ Wasserstoff, Methyl, Ethyl, Benzyl oder Phenyl und

$Z^{1-}$ ein Anion bedeuten.

Unter den Verbindungen der Formel (III) sind auch Farbstoffmischungen zu verstehen, wie beispielsweise die Mischung der Verbindungen (IV) bis (VI):

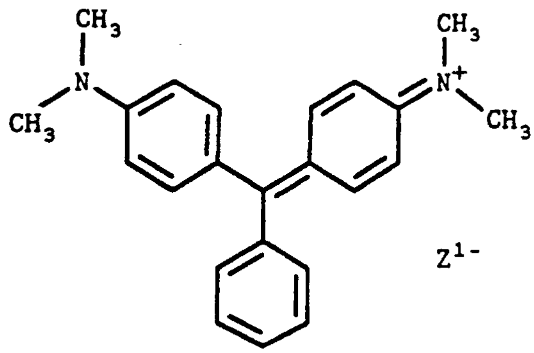

(IV),

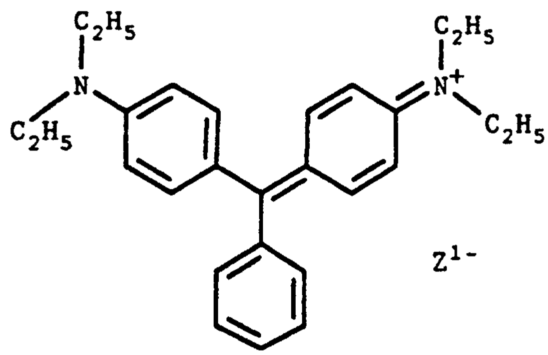

(V),

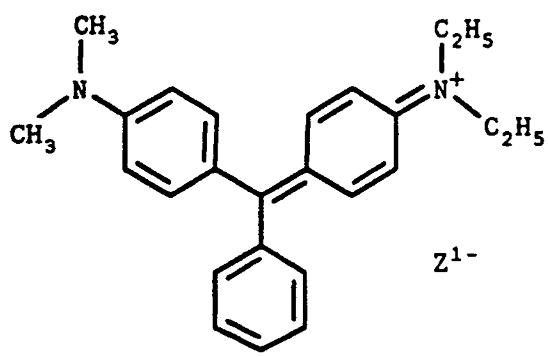

(VI).

Besonders bevorzugt ist ein Verfahren zur Herstellung von sulfogruppenfreien Triphenylmethanfarbstoffen der Formel

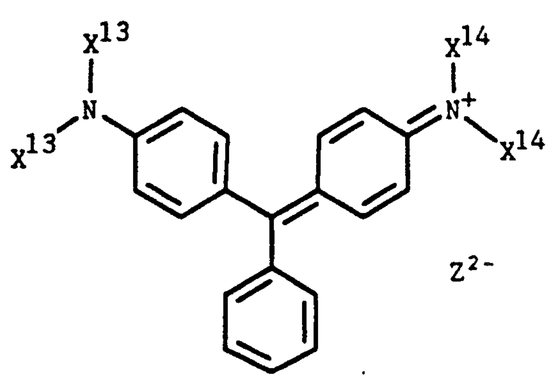

(VII),

worin

$X^{13}$ und $X^{14}$ Methyl oder Ethyl und
$Z^{2-}$ ein Anion von Salzsäure, Schwefelsäure, Phosphorsäure, Methansulfonsäure, Methanphosphonsäure, Ameisensäure, Essigsäure, Propionsäure, Glycolsäure, Milchsäure, Oxalsäure, Malonsäure, Bernsteinsäure, Äpfelsäure, Weinsäure, Maleinsäure, Fumarsäure, Diglycolsäure oder Zitronensäure bedeuten,
und als Lösungsmittel ggf. durch Methyl, Ethyl, Propyl, 2-Propyl, Butyl, Methoxy, Ethoxy, Propoxy, 2-Propoxy, Butoxy, Fluor, Chlor oder Brom substituiertes Benzol gemeint ist.

Beispiele für solche Lösungsmittel sind Toluol, Xylol, Ethylbenzol, Cumol, 1,2,3-, 1,2,4- oder 1,3,5-Trimethylbenzol, 4-Isopropyl-toluol, Diethylbenzol, Diisopropylbenzol, Anisol, Phenetol, Methylanisol, Chlorbenzol, 1,2-Dichlor-benzol, Chlortoluol, Chlorxylol oder Gemische davon.

Ganz besonders bevorzugt ist ein Verfahren zur Herstellung der Verbindungen der Formel (VII), worin
$Z^{2-}$ ein Anion von Salzsäure, Schwefelsäure, Phosphorsäure, Essigsäure oder Oxalsäure bedeutet,
das Mangan als Carbonat ausgefällt und abgetrennt wird und als Lösungsmittel Toluol, Xylol, Chlorbenzol oder 1,2-Dichlor-benzol eingesetzt werden.

Im besonderen Maße geeignet ist das erfindungsgemäße Verfahren zur Herstellung von Malachitgrünsalzen in fester oder gelöster Form
a) der Formel

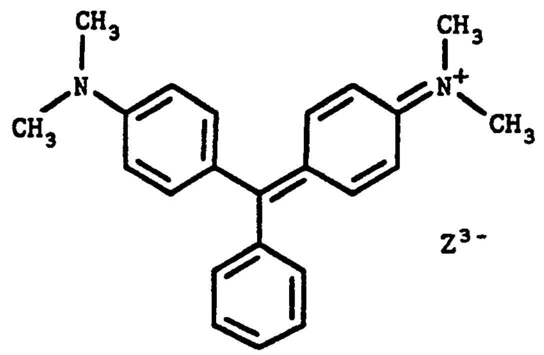

(VIII),

worin
$Z^{3-}$ $HSO_4^-$, 1/2 $SO_4^{2-}$, $H_2PO_4^-$,
$HOOC\text{-}COO^- \cdot 1/2\ HOOC\text{-}COOH$ bedeutet,
durch Oxidation seines Leukoproduktes mit Braunstein, dadurch gekennzeichnet, daß man nach erfolgter Oxidation mit Natrium- oder Kaliumcarbonat Mangancarbonat und die Carbinolbase des Farbstoffes bildet, diese in Toluol aufnimmt, vom Mangancarbonat und von der Wasserphase abtrennt, entweder eine wäßrige Lösung der Säure $HZ^3$ zusetzt, vermischt und die Toluolphase abtrennt, oder das Toluol abdestilliert und den Rückstand in einer wäßrigen Lösung der Säure $HZ^3$ aufnimmt und in jedem Fall zur Trockene eindampft,
b) der Formel

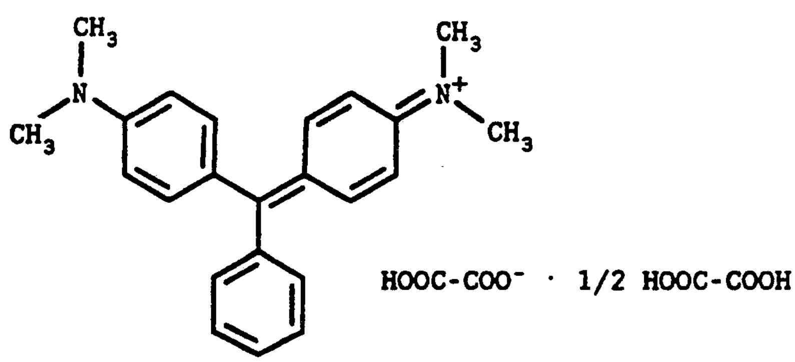

(IX)

durch Oxidation seines Leukoproduktes mit Braunstein, dadurch gekennzeichnet, daß man nach erfolgter Oxidation mit Natrium- oder Kaliumcarbonat Mangancarbonat und die Carbinolbase des Farbstoffes bildet, diese in Toluol aufnimmt, von Mangancarbonat und von der Wasserphase abtrennt, mit einer nicht zu verdünnten wäßrigen Lösung von Oxalsäure versetzt und vermischt, in der Wärme die Toluolphase abtrennt

und aus der wäßrigen Phase durch Abkühlen den Farbstoff auskristallisieren läßt und ihn isoliert,
c) der Formel

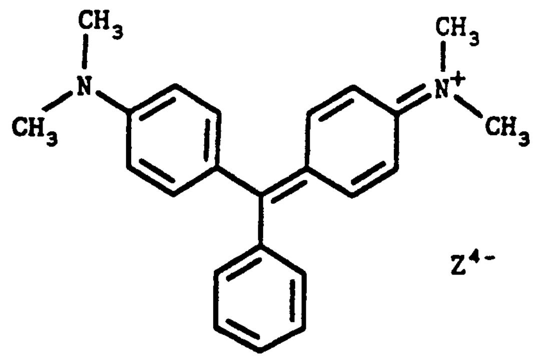

(X),

worin
$Z^{4-}$ $Cl^-$, $HSO_4^-$, 1/2 $SO_4^{2-}$ $CH_3COO^-$ oder Mischungen davon bedeutet,
durch Oxidation seines Leukoproduktes mit Braunstein, dadurch gekennzeichnet, daß man nach erfolgter Oxidation mit Natrium- oder Kaliumcarbonat Mangancarbonat und die Carbinolbase des Farbstoffes bildet, diese in Toluol aufnimmt, von Mangancarbonat und von der Wasserphase abtrennt, eine wäßrige Lösung der Säure $HZ^4$ zusetzt und vermischt und die Toluolphase abtrennt.

## Beispiel 1

90,3 g Leukomalachitgrün werden in einer Mischung aus 86,5 g konz. Salzsäure und 100 ml Wasser gelöst und diese Lösung mit 500 ml Wasser verdünnt.

Nach Kühlen auf 0° C werden 91,5 g einer 34%igen wäßrigen Braunsteinsuspension zugesetzt. Die Temperatur steigt während der Oxidation auf 15° C an. Nach 15 min werden 140 g Kaliumcarbonat und 100 ml Toluol zugesetzt. Die Mischung wird auf 55-60° C geheizt, über eine Fritte abgesaugt und mit 40 ml Toluol nachgewaschen. Die Wasserphase wird abgetrennt und die Toluolphase im Rotationsverdampfer bei 20 mbar und 45° C weitgehend eingeengt. Eine Lösung aus 33,5 g wasserfreier Oxalsäure in 150 ml Wasser wird zugesetzt und 30 min bei 45° C vermischt. Dann werden bei 20 mbar und 45° C das restliche Toluol und das Wasser bis zur Gewichtskonstanz abdestilliert. Aus dem Kolben des Rotationsverdampfers lassen sich 121,5 g ca. 91%iges Malachitgrünoxalat (87 % der Theorie) als grüne Kristalle entnehmen. Schmelzpunkt: 137-139° C. Mn-Gehalt: 1 mg/kg.

## Beispiel 2

776,8 g Leukomalachitgrünlösung werden wie in Beispiel 1 hergestellt und oxidiert.
15 min nach Braunsteinzugabe werden 107,5 g wasserfreie Soda und 100 ml technisches Xylolgemisch zugesetzt. Die Mischung wird auf 55-60° C geheizt, über eine Fritte abgesaugt und mit 40 ml Xylol nachgewaschen. Die Wasserphase wird abgetrennt. Die Xylolphase wird mit einer Mischung aus 125 ml Wasser und 25 g konz. Schwefelsäure 2 h bei 40° C vermischt und in einem Laborschaufeltrock ner bei 20 mbar und 45° C zur Trockene eingeengt. Man erhält 116,8 g ca. 90%iges Malachitgrünhydrogensulfat (90 % der Theorie) als grüne Kristalle vom Schmelzpunkt 140-145° C.
Mn-Gehalt: 1 mg/kg.

## Beispiel 3

Analog erhält man bei Verwendung von 51,3 g Citronensäure-Monohydrat 155,4 g ca. 82%iges Malachitgrüncitrat (89 % der Theorie) als blaugrüne Kristalle vom Schmelzpunkt 100-105° C.

## Beispiel 4

Analog erhält man bei Verwendung von 28,2 g 85%iger Phosphorsäure 112 g ca. 93%iges Malachitgründihydrogenphosphat (89 % der Theorie) als blaugrünes Pulver vom Schmelzpunkt 155 ° C.

Beispiel 5

Setzt man analog Beispiel 2 792,1 g einer Leukodiamantgrünlösung, die aus 105,6 g Leukodiamantgrün hergestellt wurde, ein und verfährt wie in Beispiel 2 angegeben, so erhält man 126,3 g ca. 92%iges Diamantgrünhydrogensulfat (88 % der Theorie) als grüne Kristalle vom Schmelzpunkt 75-80 ° C.
Mn-Gehalt: 1 mg/kg.

Beispiel 6

776,8 g Leukomalachitgrünlösung werden wie in Beispiel 1 hergestellt und oxidiert.
15 min nach Braunsteinzugabe werden 100 ml 30%ige Natronlauge und 100 ml 1,2-Dichlor-benzol zugesetzt. Die Mischung wird auf 55-60 ° C geheizt. Man läßt das Manganhydroxid sedimentieren, saugt über eine Fritte ab und wäscht mit 40 ml 1,2-Dichlor-benzol. Man trennt die organische Phase vom Wasser ab und verrührt bei 45 ° C mit 238 ml Wasser und 37,1 g wasserfreier Oxalsäure 2 h. Schließlich trennt man die Phasen, rührt die wäßrige Farbstoffphase kalt, saugt ab und trocknet bei 50 ° C im Vakuum. Man erhält so 89,6 g ca. 100%iges Malachitgrünoxalat (71 % der Theorie) als feines grünes Kristallisat vom Schmelzpunkt 160 ° C.
Mn-Gehalt: < 1 mg/kg.

Wird der Versuch wiederholt und werden dabei die 1,2-Dichlor-benzol- und die wäßrige Farbstoffmutterlauge wiederverwendet, so steigt die Ausbeute auf 85-88 % der Theorie.

Beispiel 7

776,8 g Leukomalachitgrünlösung werden wie in Beispiel 1 hergestellt und oxidiert.
15 min nach Braunsteinzugabe werden 107,5 g wasserfreie Soda und 100 ml Toluol zugesetzt. Die Mischung wird auf 55-60 ° C geheizt, sedimentieren gelassen, über eine Fritte abgesaugt und mit 40 ml Toluol nachgewaschen. Die Wasserphase wird abgetrennt. Die Toluolphase wird mit einer Mischung aus 50 ml Wasser und 17,3 g konz. Schwefelsäure 1 h verrührt. Dann läßt man absitzen und trennt ab. Die Farbstofflösung wird im Vakuum kurz andestilliert zur Entfernung von Toluolresten und dann mit Wasser auf eine Gesamtmasse von 224 g eingestellt. Man erhält so eine stabile grüne Lösung einer Mischung von Malachitgrünhydrogensulfat und Malachitgrünsulfat, die bezogen auf Farbstoffkation 36%ig ist. Ausbeute: 89,4 %.
Mn-Gehalt: 1 mg/kg.

Analog lassen sich die folgenden Beispiele herstellen:

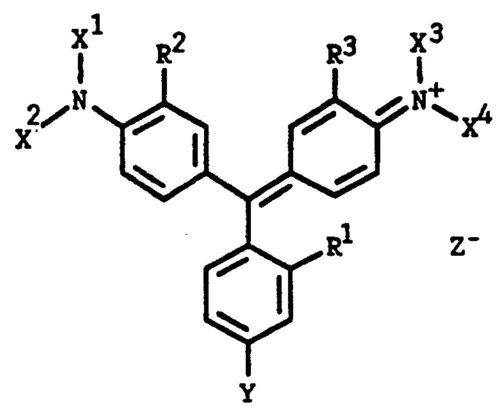

| Beisp. | $X^1$ | $X^2$ | $X^3$ | $X^4$ | Y | $R^1$ | $R^2$ | $R^3$ | Z | Ausbeute |
|---|---|---|---|---|---|---|---|---|---|---|
| 8 | $CH_3$ | $CH_3$ | $CH_3$ | $CH_3$ | $N(CH_3)_2$ | H | H | H | Cl | 85 % |
| 9 | $C_2H_5$ | 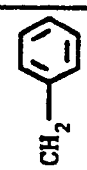 | $C_2H_5$ | 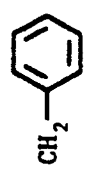 | H | H | H | H | $HSO_4$ | 80 % |
| 10 | $CH_3$ | $CH_3$ | $CH_3$ | $CH_3$ | H | Cl | H | H | HOOC-COO | 83 % |
| 11 | $C_2H_5$ | H | $C_2H_5$ | H | H | Cl | $CH_3$ | $CH_3$ | HOOC-COO | 79 % |

## Ansprüche

1. Verfahren zur Herstellung von sulfogruppenfreien Triphenylmethanfarbstoffen der Formel

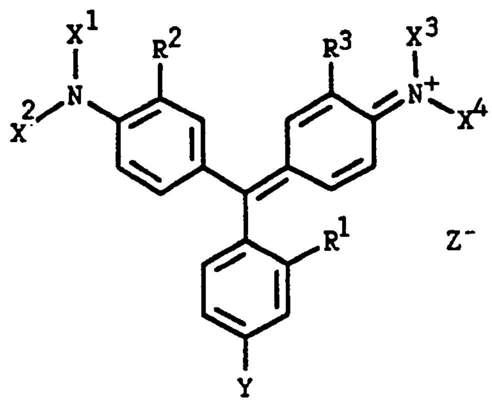

worin
$R^1$ - $R^3$ Wasserstoff, $C_1$-$C_6$-Alkyl, vorzugsweise Methyl, oder Halogen, vorzugsweise Chlor,
Y Wasserstoff oder $NX^5X^6$,
$X^1$ - $X^6$ Wasserstoff,$C_1$-$C_6$-Alkyl, vorzugsweise Methyl, Ethyl, Benzyl oder Phenyl und
$Z^-$ ein Anion bedeuten,
durch Oxidation ihrer Leukoprodukte mit Braunstein, dadurch gekennzeichnet, daß man nach erfolgter Oxidation durch Zusatz von Hydroxid oder Carbonat, Manganhydroxid oder -carbonat und die Carbinolbase des Farbstoffes bildet, dabei oder anschließend die Carbinolbase in einem mit Wasser nicht mischbaren Lösungsmittel aufnimmt, vom Manganhydroxid oder -carbonat und von der Wasserphase abtrennt, die Lösung mit der ggf. mit Wasser gemischten Säure HZ vermischt, das Lösungsmittel entweder schon vor dem Vermischen abdestilliert oder nach dem Vermischen abtrennt oder abdestilliert und den Farbstoff als Lösung oder nach Eindampfen oder Auskristallisieren in fester Form isoliert.

2. Verfahren gemäß Anspruch 1 zur Herstellung von sulfogruppenfreien Triphenylmethanfarbstoffen der Formel

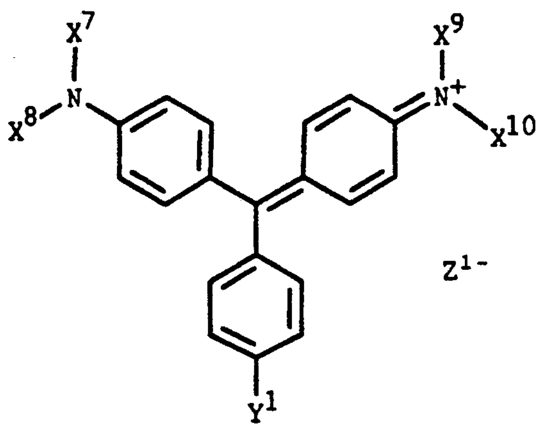

worin
$Y^1$ Wasserstoff oder $NX^{11}X^{12}$,
$X^7$ - $X^{12}$ Wasserstoff, Methyl, Ethyl, Benzyl oder Phenyl und
$Z^{1-}$ ein Anion bedeuten.

3. Verfahren gemäß Anspruch 1 zur Herstellung von sulfogruppenfreien Triphenylmethanfarbstoffen der Formel

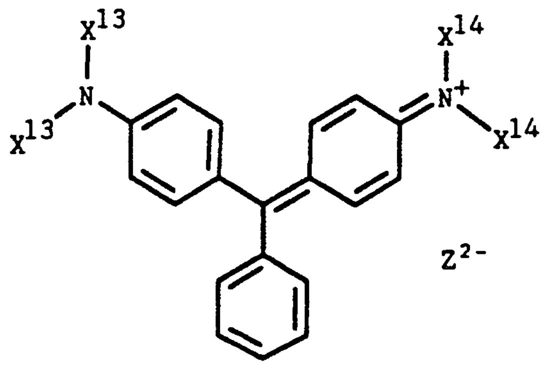

worin

$X^{13}$ und $X^{14}$ Methyl oder Ethyl und

$Z^{2-}$ ein Anion von Salzsäure, Schwefelsäure, Phosphorsäure, Methansulfonsäure, Methanphosphonsäure, Ameisensäure, Essigsäure, Propionsäure, Glycolsäure, Milchsäure, Oxalsäure, Malonsäure, Bernsteinsäure, Äpfelsäure, Weinsäure, Maleinsäure, Fumarsäure, Diglycolsäure oder Zitronensäure bedeuten,

und als Lösungsmittel ggf. durch Methyl, Ethyl, Propyl, 2-Propyl, Butyl, Methoxy, Ethoxy, Propoxy, 2-Propoxy, Butoxy, Fluor, Chlor oder Brom substituiertes Benzol gemeint ist.

4. Verfahren gemäß Anspruch 3, worin

$Z^{2-}$ ein Anion von Salzsäure, Schwefelsäure, Phosphorsäure, Essigsäure oder Oxalsäure bedeutet, das Mangan als Carbonat ausgefällt und abgetrennt wird und als Lösungsmittel Toluol, Xylol, Chlorbenzol oder 1,2-Dichlor-benzol eingesetzt werden.

5. Verfahren zur Herstellung des Farbstoffes der Formel

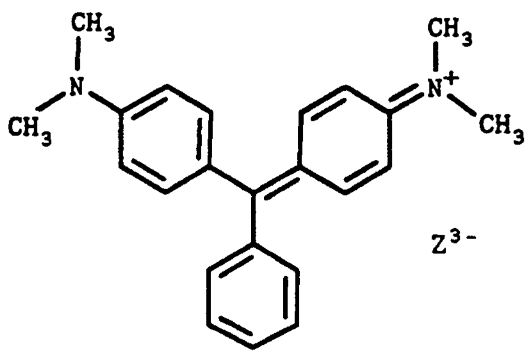

worin

$Z^{3-}$ $HSO_4^-$, 1/2 $SO_4^{2-}$, $H_2PO_4^-$, $HOOC\text{-}COO^-$ • 1/2 $HOOC\text{-}COOH$ bedeutet,

durch Oxidation seines Leukoproduktes mit Braunstein, dadurch gekennzeichnet, daß man nach erfolgter Oxidation mit Natrium- oder Kaliumcarbonat Mangancarbonat und die Carbinolbase des Farbstoffes bildet, diese in Toluol aufnimmt, vom Mangancarbonat und von der Wasserphase abtrennt, entweder eine wäßrige Lösung der Säure $HZ^3$ zusetzt, vermischt und die Toluolphase abtrennt, oder das Toluol abdestilliert und den Rückstand in einer wäßrigen Lösung der Säure $HZ^3$ aufnimmt und in jedem Fall zur Trockene eindampft.

6. Verfahren zur Herstellung des Farbstoffes der Formel

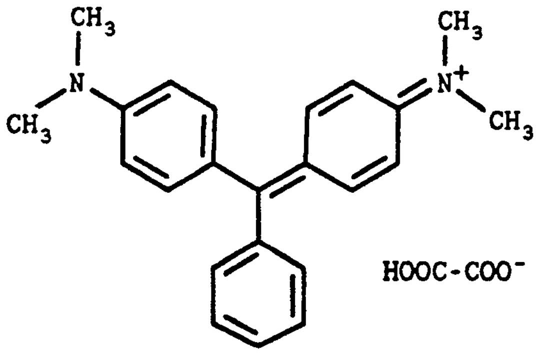

$HOOC-COO^- \cdot 1/2\ HOOC-COOH$

durch Oxidation seines Leukoproduktes mit Braunstein, dadurch gekennzeichnet, daß man nach erfolgter Oxidation mit Natrium- oder Kaliumcarbonat Mangancarbonat und die Carbinolbase des Farbstoffes bildet, diese in Toluol aufnimmt, von Mangancarbonat und von der Wasserphase abtrennt, mit einer nicht zu verdünnten wäßrigen Lösung von Oxalsäure versetzt und vermischt, in der Wärme die Toluolphase abtrennt und aus der wäßrigen Phase durch Abkühlen den Farbstoff auskristallisieren läßt und ihn isoliert.

7. Verfahren zur Herstellung einer Lösung des Farbstoffs der Formel

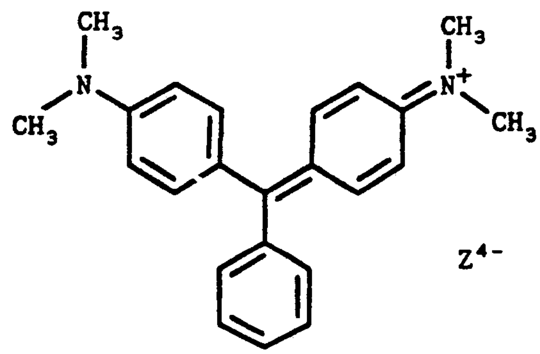

$Z^{4-}$

worin
$Z^{4-}$ $Cl^-$, $HSO_4^-$, 1/2 $SO_4^{2-}$, $CH_3COO^-$ oder Mischungen davon bedeutet,
durch Oxidation seines Leukoproduktes mit Braunstein, dadurch gekennzeichnet, daß man nach erfolgter Oxidation mit Natrium- oder Kaliumcarbonat Mangancarbonat und die Carbinolbase des Farbstoffes bildet, diese in Toluol aufnimmt, von Mangancarbonat und von der Wasserphase abtrennt, eine wäßrige Lösung der Säure $HZ^4$ zusetzt und vermischt und die Toluolphase abtrennt.